# EUROPÄISCHE PATENTSCHRIFT

(11) **EP 0 889 320 B1**
(45) Veröffentlichungstag und Bekanntmachung des Hinweises auf die Patenterteilung: **17.12.2003**
(21) Anmeldenummer: 98111340.0
(22) Anmeldetag: 19.06.1998
(51) Int. Cl.: G01N 21/86, G01N 21/89

(54) **Verfahren und Vorrichtung zum Abtasten einer vorzugsweise textilen Warenbahn**
Procedure and device for scanning of preferably textile web
Procédé et dispositif pour scanner de préférence du tissu textile

(30) Priorität: 02.07.1997 DE 19728170; 30.07.1997 DE 19732831
(43) Veröffentlichungstag der Anmeldung: 07.01.1999
(73) Patentinhaber: Mahlo GmbH & Co. KG, 93342 Saal (DE)
(72) Erfinder: Daul, Robert, Dipl.-Ing. (FH), 86316 Friedberg-Wiffertshausen (DE); Reitner, Franz, Dipl.-Ing. (FH), 93342 Saal/Unterschambach (DE)
(74) Vertreter: Bohnenberger, Johannes, Dr.

(56) Entgegenhaltungen:
- WO-A-91/14934
- DE-A1- 4 131 835
- SU-A- 857 732
- US-A- 3 867 039
- US-A- 4 439 038

## Beschreibung

Die Erfindung betrifft ein Verfahren zum Abtasten einer vorzugsweise textilen Warenbahn auf ihre Farbwerte sowie eine Vorrichtung zum Durchführen des Verfahrens.

Bevor eine Warenbahn zum Konfektionieren bzw. Zuschneiden gelangt, durchläuft sie eine Warenschau. Dabei wird die Warenbahn unter anderem auf eventuell bestehende unbeabsichtigte Farbunterschiede oder Farbänderungen untersucht. Dies geschieht bislang allein durch das menschliche Auge, das ein recht effektives Meßsystem für die Farbbeurteilung darstellt.

Die Schwächen dieses Systems sind allerdings hinreichend bekannt. Zum einen läßt die Aufmerksamkeit eines Betrachttrachters normalerweise bereits nach kurzer Zeit stark nach. Zum anderen kann das menschliche Auge feine Farbunterschiede nur dann erkennen, wenn die unterschiedlich gefärbten Flächen direkt nebeneinander liegen. Oft hat man aber nach Färbeprozessen oder bei anderweitig farbigen Warenbahnen eine schleichende Farbänderung, die sich über mehrere Meter der Warenbahn erstreckt und deshalb nicht erkannt wird. Das Risiko, bei der Warenschau feine, insbesondere schleichende Farbunterschiede zu übersehen, ist groß.

Später, nach der Konfektionierung der Ware, fallen kleinste Farbunterschiede plötzlich sehr unangenehm auf, besonders dann, wenn unterschiedlich gefärbte Stoffteile zusammengenäht werden. Herkömmlich gab es keine andere Möglichkeit, als in regelmäßigen Abständen Stoffmuster aus der Warenbahn auszuschneiden und miteinander zu vergleichen.

Um Farbunterschiede über die Breite der Warenbahn zu erkennen, wurde diese bei der Warenschau manuell gefaltet,so daß die seitlichen Bereiche der Warenbahn direkt nebeneinander zu liegen kamen. In jedem Fall war die herkömmliche Farbkontrolle sehr aufwendig und zudem in gewissem Maße subjektiv und in hohem Maße uneffektiv.

Aus der DE 41 31 835 A1 ist ein Fehlererkennungsgerät zur Beurteilung von Oberflächen- und Transmissionsfehlern, z.B. Löchern, an einer laufenden Warenbahn bei der Produktion oder Warenschau vorbekannt. Konkret ist dort eine Rasterzeile von Strahlungsquellen vorgesehen, die alle zeitgleich, vorzugsweise impulsförmig betrieben werden. Mit Hilfe vorgeschalteter Sammellinsen wird die gesamte Breite der zu untersuchenden Warenbahn quasi parallel bestrahlt. Ein Teil der von der Warenbahn reflektierten Strahlung wird von einer analog zur Bestrahlungszeile aufgebauten Empfängerzeile aufgenommen und ausgewertet. Die Auswerteeinrichtung führt eine Überprüfung bezogen auf vorgegebene Grenzwerte durch und stellt Über- oder Unterschreiten fest, um dann eine Fehlermeldung auszulösen.

Die SU-PS 857732 A geht von einer durchstimmbaren Strahlungsquelle aus, welche amplitudenmoduliert ist. Eine dort vorgesehene elektronische Schaltung sorgt für eine automatische Stabilisierung der Strahlungsintensität der eingesetzten Fotodioden sowie der Verstärkung der Fotoempfänger. Zusätzlich ist dort eine Referenzlichtquelle vorgesehen. Insgesamt zeigt dieses Dokument ein Spektrofotometer, welches Lichtstrahlung unterschiedlicher spektraler Zusammensetzung und amplitudenmoduliert verwendet.

Gemäß US-PS 4,439,038 ist es bekannt, Reflexionsmessungen an textilen Materialien auszuführen, um die Farbgebung derartiger Materialien zu steuern, wobei bei einer Ausgestaltung eine Zerlegung in drei Grund- oder Elementarfarben erfolgt.

Die Einrichtung zur Farbinspektion eines Produkts gemäß US-PS 3,867,039 greift auf zwei ausgewählte Wellenlängen im optischen Spektrum zurück und ermittelt ein Verhältnis zwischen den aus diesen Wellenlängensignalen ermittelten Werten, um eine Abweichung von Grundfarbwerten bzw. Sollfarbwerten zu bestimmen. Die optische Einrichtung verfügt unter diesem Aspekt über ein koaxiales Linsensystem und umfaßt einen Strahlteiler, so daß ansonsten durch die Optik bedingte Farbverfälschungen ausgeschlossen werden können. Ganz grundsätzlich ist die dortige optische Einrichtung so ausgelegt, daß opakes Material zum Einsatz kommt, so daß mit diffuser Strahlung gearbeitet werden kann. Auf diesem Wege soll es z.B. möglich werden, Kartoffelchips hinsichtlich ihres Verarbeitungszustands zu bewerten. Dann, wenn nämlich ein zu dunkler Kartoffelchip erkannt wird, erhöht sich der Reflexionsgrad von Licht einer bestimmten Wellenlänge, die von der üblichen Gestalt korrekt behandelter Kartoffelchips abweicht. Es findet also mit Hilfe des, koaxialen optischen Systems und den entsprechend zugeordneten fotoelektrischen Sensoren ein unmittelbarer Vergleich der Verhältnisse reflektierter Strahlung bei vorgegebenen zwei Wellenlängen statt.

Aus dem Vorgenannten ist es daher Aufgabe der Erfindung, ein weiterentwickeltes Verfahren sowie eine zugehörige Vorrichtung zum Abtasten einer vorzugsweise textilen Warenbahn auf ihre Farbwerte mittels Warenschau anzugeben, wobei dafür Sorge zu tragen ist, daß jede Stelle der Warenbahn mit Licht gleicher Intensität und spektraler Zusammensetzung untersucht werden kann.

Die Lösung der Aufgabe der Erfindung erfolgt mit einem Verfahren in seiner Definition gemäß der Lehre nach Patentanspruch 1 sowie mit einer Vorrichtung mit den Merkmalen nach Patentanspruch 3.

Vorteilhafte Ausgestaltungen sind in den Unteransprüchen angegeben.

Eine wesentliche Idee besteht darin, die Warenschau nicht mehr mit freiem Auge durchzuführen, sondern die Warenbahn mit einer vorzugsweise kontinuierlich strahlenden Lichtquelle zu beleuchten und das von der Warenbahn reemittierte Spektrum bezogen auf die jeweils abgetasteten Bereiche der Warenbahn zu protokollieren.

Es läßt sich so für jede Warenbahn ein "Paß" erstellen. Dieser geht zusammen mit der Warenbahn zum nachfolgenden Kunden oder Arbeitsschritt, insbesondere zur Konfektion, und enthält die Protokolle der jeweils aufgenommenen Spektren oder der daraus abgeleiteten farbmetrischen Daten. Die Form der auf der Warenbahn abgetasteten Bereiche ergibt sich aus der Öffnungsgeometrie der Abtasteinrichtung und einer gegebenenfalls vorhandenen Relativbewegung zwischen Abtasteinrichtung und Warenbahn. Bewegt sich die Warenbahn und/oder die Abtasteinrichtung während des Abtastvorgangs, so ergibt sich ein annähernd streifenförmiger Bereich.

Eine kontinuierliche Beleuchtung der Warenbahn mit einer Lichtquelle von relativ konstanter Intensität wird bevorzugt. In diesem Fall läßt sich das von der Warenbahn reemittierte Spektrum über einen streifenförmigen Bereich in Längsrichtung der Warenbahn oder quer in einem Abtastvorgang über eine gewisse Zeitspanne, bzw. eine gewisse Ausdehnung der Warenbahn integrieren. Dieses integrierte Spektrum weist dann weniger Unregelmäßigkeiten auf und ist damit weit besser geeignet, schleichende Farbunterschiede oder Farbunterschiede beispielsweise vom einen Seitenrand zum anderen Seitenrand der Warenbahn festzustellen. Bei gepulster Beleuchtung dagegegen lassen sich quasi nur Momentaufnahmen abtasten, bei denen zufällige Fehler weit höher liegen und diese zufälligen Fehler oder Abweichungen nachfolgend als Farbunterschied interpretiert werden.

Die reemittierte Strahlung wird zweckmäßigerweise bei lau fender Warenbahn erfaßt. Zur Abtastung von Farbunterschie den in Längsrichtung wird die Warenbahn in gespanntem Zustand an einer Abtasteinrichtung vorbeigeführt. Für Abtast vorgänge quer zur Warenbahn kann die Abtasteinrichtung auf einer senkrecht zur Längsrichtung der Warenbahn angeordneten Traverse beweglich gelagert sein, so daß die Abtasteinrichtung mittels eines Antriebs quer über die Warenbahn verfahren werden kann. Sofern eine Relativbewegung zwischen der Warenbahn und der Abtasteinrichtung gegeben ist, ergibt sich je nach Dauer des Abtastvorgangs ein annähernd streifenförmiger Abtastbereich auf der Warenbahn.

Zur Messung von Farbunterschieden in Längsrichtung der Warenbahn wird ein parallel zu den Seitenrändern der Warenbahn verlaufender Bereich abgetastet, der in mehrere Teilbereiche untergliedert ist. Diese Teilbereiche bilden die tatsächlich abgetasteten Bereiche, die jeweils einen Abtastvorgang darstellen, innerhalb dessen das reemittierte Spektrum integriert wird. Dieses reemittierte Spektrum wird dann warenlängenbezogen protokolliert.

Um auch Farbunterschiede quer zur Warenbahn feststellen zu können, läßt sich die Position der Abtasteinrichtung relativ zur Breite der Warenbahn derart verändern, daß Farbunterschiede auf mehreren Breitenbereichen (beispielsweise am linken Seitenrand der Warenbahn, in der Mitte, am rechten Seitenrand der Warenbahn) abgetastet werden können. Hierbei kann die Verschiebung der Abtasteinrichtung über die Breite der Warenbahn innerhalb des Abtastvorgangs oder außerhalb der Abtastung erfolgen. Im ersten Fall ergibt bei gleichzeitigem Längstransport der Warenbahn ein schräg über die Breite der Warenbahn verlaufender Abtastbereich. Im zweiten Fall verlaufen die Abtastbereiche wiederum exakt in Längsrichtung der Warenbahn, sind aber aufgrund des Längstransports der Warenbahn in Längsrichtung versetzt.

Da vor allem Farbunterschiede über einen größeren Bereich bzw. schleichende Farbänderungen festgestellt werden sollen, muß nicht die gesamte Fläche der Warenbahn abgetastet werden. Vielmehr genügen über die Breite der Warenbahn beispielsweise drei Abtastbereiche. In Längsrichtung der Warenbahn können die abgetasteten Teilbereiche durch mehr oder weniger lange Dunkelbereiche getrennt sein.

Zur Durchführung des Verfahrens wird eine Vorrichtung nach den Merkmalen des Anspruches 3 vorgeschlagen. Eine derartige Vorrichtung umfaßt unter anderem eine Führungs- oder Transporteinrichtung, durch die die Warenbahn im gespannten Zustand hindurchgeführt wird, eine Lichtquelle, mit der die Warenbahn vorzugsweise kontinuierlich beleuchtet wird, eine Abtasteinrichtung, welche das von der Warenbahn reemittierte Licht über einen Abtastbereich abtastet, ein mit der Abtasteinrichtung in Verbindung stehendes Spektrometer, welches das reemittierte Licht spektral zerlegt und eine Protokolliereinrichtung, welche das jeweils abgetastete Spektrum und/oder daraus abgeleitete Werte jeweils bezogen auf den abgetasteten Bereich fortlaufend protokolliert. Durch diese Protokollierung entsteht ein warenlängenbezogener "Paß" über die Farbwerte der jeweiligen Warenbahn. Dieser "Paß" geht zusammen mit der Warenbahn zum Kunden oder nachfolgenden Arbeitsschritt, insbesondere zur Konfektionierung, die unter Beachtung der warenlängenbezogenen Farbwerte erfolgt.

Die Protokolliereinrichtung umfaßt zweckmäßigerweise eine Datenverarbeitungsanlage, in der die jeweiligen Spektren und/oder daraus abgeleitete Werte in einem Speicher abgelegt oder auf einen Datenträger geschrieben werden.

Wie bereits erwähnt ist die Abtasteinrichtung zweckmäßigerweise auf einer quer zur Warenbahn verlaufenden Traverse beweglich angeordnet, um so die Farbwerte an verschiedenen Breitenbereichen der Warenbahn abtasten zu können.

Die Erfindung wird nachstehend auch hinsichtlich weiterer Merkmale und Vorteile anhand der Beschreibung eines Ausführungsbeispiels näher erläutert.

Hierbei zeigen:
- Fig. 1: eine Ausführungsform der erfindungsgemäßen Vorrichtung von vorne;
- Fig. 2: eine Schnittansicht der Vorrichtung nach Fig. 1 entlang der Linie II - II;
- Fig. 3: die Vorrichtung aus Fig. 1 von oben; und
- Fig. 4a bis 4c: skizzenhafte Darstellungen der Abtastbereiche auf der Warenbahn bei verschiedenen Abtastmethoden.

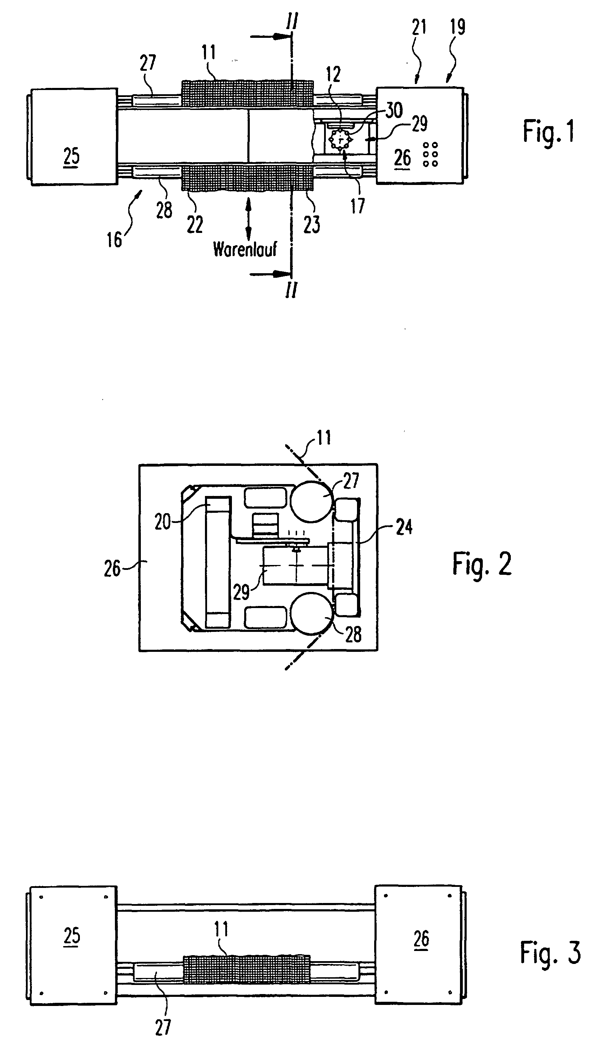

In Fig. 1 ist eine Ausführungsform der erfindungsgemäßen Vorrichtung in Frontansicht dargestellt. Die Vorrichtung umfaßt zunächst zwei seitliche Rahmenteile 25, 26, zwischen denen eine Führungseinrichtung 16 für eine Warenbahn 11 angeordnet ist. Die Führungseinrichtung 16 umfaßt eine erste Rolle 27 und eine zweite Rolle 28, über die jeweils die Warenbahn 11 geführt ist. Die Rollen 27, 28 sind an den seitlichen Rahmenteilen 25, 26 gelagert. Die erste Rolle 27 und/oder die zweite Rolle 28 können angetrieben sein oder - wenn die Warenbahn ohnehin durch andere Vorrichtungen transportiert wird - freilaufen.

Zwischen der ersten Rolle 27 und der zweiten Rolle 28 ist ein Meßkopf 29 angeordnet, der über eine parallel zu den Rollen 27, 28 verlaufende Traverse von einem ersten seitlichen Rand 22 der Warenbahn bis zu einem zweiten seitlichen Rand 23 der Warenbahn 11 hin- und herbeweglich ist. Zu diesem Zweck ist in einem der seitlichen Rahmenteile 25, 26 ein Antrieb vorgesehen, mit dem sich der Meßkopf 29 auf der Traverse 20 hin- und herbewegen läßt.

Auf der dem Meßkopf 29 gegenüberliegenden Seite der Warenbahn 11 ist zwischen den Rollen 27, 28 eine Verblendung 24 angeordnet, welche die Rückseite der Warenbahn 11 abdunkelt. Diese Verblendung 24 ist in Fig. 1 teilweise weggebrochen, so daß der Meßkopf 29 und die parallel zu den Rollen 27, 28 verlaufende Traverse 20 sichtbar ist.

Der Meßkopf 29 umfaßt eine Abtasteinrichtung 17 und eine Lichtquelle 12. Bei der Lichtquelle 12 handelt es sich in der hier beschriebenen Ausgestaltung um eine kontinuierliche Lichtquelle. Es ist aber auch eine Beleuchtung der Warenbahn mit gepulstem Licht, beispielsweise mit Blitzlichtlampen denkbar.

Meßgeometrie und Meßkopf 29 halten sich allgemein an DIN 5033 Teil 7. Demgemäß kommt eine Meßgeometrie 45°/0° in Betracht, bei der ein konischer oder gerichteter Strahlungseinfall unter 45° auf die Warenbahn und eine konische (gerichtete) Beobachtung unter 0°, d.h. normal zur Warenbahn 11 erfolgt. In der Meßgeometrie 0°/95° sind Strahlungseinfall und Beobachtungsrichtung vertauscht. Die Meßgeometrie 0°/45° ergibt sich somit aus der Umkehrung der Meßgeometrie 45°/0°.

Weiterhin kommt auch eine Meßgeometrie d/8 in Betracht, bei der der Strahlungseinfall halbräumlich diffus auf die Warenbahn 11 und eine konische Beobachtung unter 8° +/- 2° erfolgt.

In der Meßgeometrie 8/d sind wiederum Strahlungseinfall und Beobachtung vertauscht. Der Strahlungseinfall erfolgt unter 8° +/- 2° auf die Warenbahn 11. Beobachtet wird die halbräumlich reflektierte Strahlung. Diese Meßgeometrien lassen sich durch entsprechende Anordnung der Abtasteinrichtung 17 und der Lichtquelle 12 relativ zur Warenbahn 11 erreichen.

Für die Meßgeometrie 0°/45° ist die Abtasteinrichtung 17 konzentrisch um die zentrale Lichtquelle 12 herum angeordnet und besteht aus einer Vielzahl von kreisförmig angeordneten Lichtwellenleitern 30. Die Lichtquelle 12 ist vorzugsweise so ausgerichtet, daß die Warenbahn 11 mit einem weitgehend homogenen Lichtbündel im rechten Winkel bestrahlt wird. Die konzentrisch angeordneten Lichtwellenleiter 30 sind zur Achse des Lichtbündels hingeneigt, und zwar für die Meßgeometrie 0°/45° in einem Winkel von 45°. Mittels der Lichtwellenleiter 30 wird die von der Warenbahn 11 reemittierte Strahlung gesammelt und mittels eines gemeinsamen Wellenleiters (nicht gezeigt) einem Spektrometer zugeleitet. Das Spektrometer kann beispielsweise in einem der seitlichen Rahmenteile 25, 26 untergebracht sein.

In Fig. 2 ist eine Schnittansicht entlang der Linie II - II durch die Vorrichtung nach Fig. 1 dargestellt. Gut erkennbar ist die als strichpunktierte Linie angedeutete Warenbahn 11, die zwischen den Rollen 27, 28 und der Verblendung 24 hindurchgeführt und für eine Warenschau gespannt ist. In dem Bereich zwischen den Rollen 27, 28 wird die Warenbahn 11 - wie bereits erwähnt - mittels der Lichtquelle 12 bestrahlt und das reemittierte Licht durch die Abtasteinrichtung 17 aufgenommen. Das von der Abtasteinrichtung aufgefangene reemittierte Spektrum der Warenbahn wird, wie ebenfalls erwähnt, einem Spektrometer zugeführt, in dem eine spektrale Zerlegung des reemittierten Lichts stattfindet. Das Spektrometer arbeitet bei dieser Ausführungsform mit holographischen Gittern und einer Diodenzeile mit 256 Elementen. Es ist ein Spektralbereich von 380 - 780 nm erfaßbar. Die Auflösung beträgt ungefähr 9 nm.

In Fig. 3 ist die Ausführungsform aus Fig. 1 von oben dargestellt. Zwischen den beiden seitlichen Rahmenteilen 25, 26 sind die Rollen 27, 28 angeordnet, über die die Warenbahn 11 geführt ist.

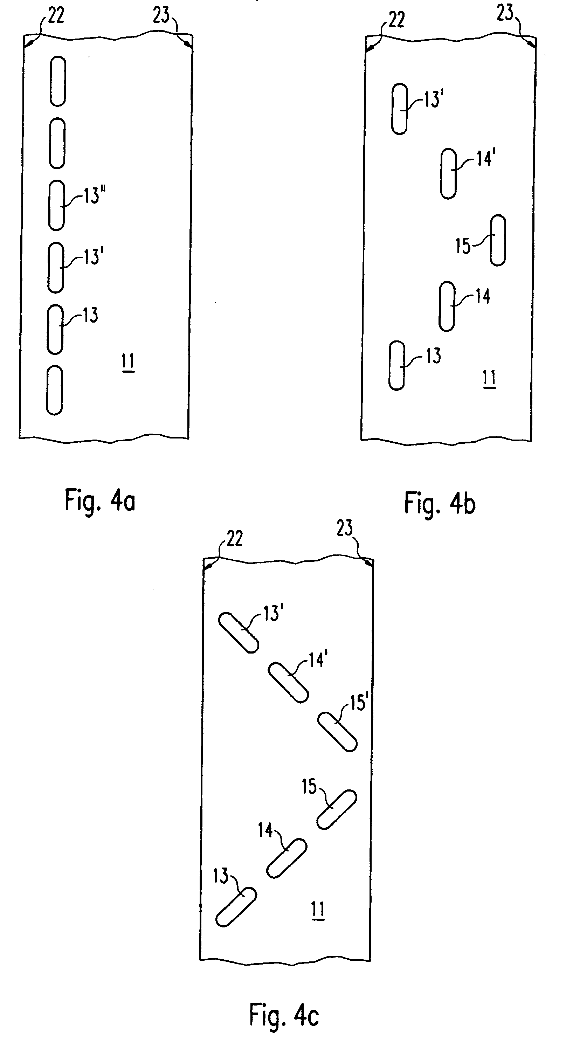

In Fig. 4a sind rein schematisch streifenförmige Bereiche 13, 13', 13'' auf der Warenbahn 11 dargestellt, die bei einer Abtastung bei laufender Warenbahn und stationärer Abtasteinrichtung 17 erhalten werden. Die streifenförmigen Bereiche 13, 13', 13" verlaufen auf einer Linie parallel zu den seitlichen Rändern 22, 23 der Warenbahn 11. Die streifenförmigen Bereiche 13, 13', 13'' können unterbrochen sein, wobei die Länge der Unterbrechungen sich bei konstanter Transportgeschwindigkeit der Warenbahn 11 aus der Länge der Pausen zwischen zwei Abtastvorgängen ergibt. Bei Abtastung über einen streifenförmigen Bereich 13, 13', 13'' wird das Farbspektrum des jeweiligen Bereichs integriert, so daß ein gemitteltes Spektrum über den jeweiligen Bereich aufgenommen wird.

In Fig. 4b ist ein anderer Meßvorgang dargestellt. Dort werden auf der Warenbahn streifenförmige Bereiche 13, 14, 15, 14', 13' erfaßt, wobei hier die Warenbahn 11 mit konstanter Geschwindigkeit transportiert wird und eine Abtastung quer zur Warenbahn in der Nähe eines ersten seitlichen Randes 22, in der Mitte und in der Nähe eines zweiten seitlichen Randes 23 vorgenommen wird. Der Meßvorgang hat dabei die Abfolge: erster Rand - Mitte - zweiter Rand - Mitte - erster Rand - Mitte - usw. ...Aus Fig. 4b geht hervor, daß die Abtasteinrichtung 17 quer zur Warenbahn 11 jeweils außerhalb der Abtastvorgänge verschoben wird, so daß die jeweiligen streifenförmigen Bereiche 13, 14, 15, 14', 13' parallel zu den seitlichen Rändern 22, 23 der Warenbahn 11 verlaufen.

In Fig. 4c ist eine weitere alternative Abtastmethode dargestellt. Bei dieser Vorgehensweise wird das Farbspektrum von Bereichen 13, 14, 15', 14', 13' sowohl während des Transports der Warenbahn 11 als auch während des Verfahrens der Abtasteinrichtung 17 quer zur Warenbahn 11 erfaßt. Die streifenförmigen Bereiche 13, 14, 15, 15', 14', 13' liegen daher schräg zur Längsrichtung der Warenbahn. Auch hier alterniert der Meßvorgang zwischen Rand - Mitte - Rand an der Warenbahn, wobei alternativ eine Abfolge erster Rand - Mitte - zweiter Rand - zweiter Rand - Mitte - erster Rand - erster Rand - Mitte usw. ...oder erster Rand - Mitte - zweiter Rand - Mitte - erster Rand - Mitte usw. ... in Betracht kommt.

Bei dem beschriebenen System erfolgt die Erfassung der Warenkante automatisch, so daß die erfindungsgemäße Vorrichtung die Positionen, auf welche die Abtasteinrichtung 17 auf der Traverse 20 bewegt werden muß, selbst errechnet. Bei Bedarf kann die Abtasteinrichtung 17 auch absolut auf eine bestimmte Position gefahren werden. Mit dem erfindungsgemäßen Verfahren bzw. der erfindungsgemäßen Vorrichtung werden die gemessenen Farbwerte fortlaufend mit einer zum Beispiel am Anfang einer Partie durchgeführten Referenzmessung bzw. mit einer festgelegten Sollvorgabe verglichen.

Es wird dann jeweils der Farbabstand zur Referenzmessung gebildet. Aus den ermittelten Farbabständen wird eine Sortierung vorgenommen. Prinzipiell ist eine Sortierung nach den bekannten Sortierungsmodellen, beispielsweise nach dem 555-System, Harold R. W., Textiles: Appearance, Analysis and Shade Sorting. TCC 19 (1987), S. 23 bis 30 oder nach dem CCC-Modell (Clemson Colour Clustering), Aspland J.R., Jarvis CH.W., Jarvis J.P., Revue and Assessment of Numerical Shade Sorting Methods, JSDC 106 (1990) S. 9 bis 14 möglich. Die 555-Sortierung wird jedoch als nachteilig empfunden, da eine Vielzahl von Farbklassen gebildet werden, die im Normalfall sehr stark unterschiedlich besetzt sind, so daß ein Großteil der Warenbahnbereiche in eine Klasse einsortiert werden muß. Die CCC-Sortierung ist hier zweckmäßiger, jedoch ebenfalls aufwendig.

Im Rahmen des hier beschriebenen Verfahrens zum Abtasten einer vorzugsweise textilen Warenbahn wird bevorzugtermaßen ein Sortierverfahren verwendet, bei dem zwei Grenzwerte E₁, E₂ für den Farbabstand gebildet werden. Dadurch entsteht eine Klassifizierung der abgetasteten Warenbahnbereiche in drei Klassen, und zwar in eine erste Klasse, bei der der Farbabstand zwischen 0 und einem ersten Grenzwert E₁ liegt, einer zweiten Klasse, bei dem der Farbabstand zwischen der ersten und einer zweiten Grenze E₂ liegt und einer dritten Klasse, bei der der Farbabstand über der zweiten Grenze E₂ liegt.

Zusätzlich läßt sich mit dem beschriebenen Verfahren bzw. der beschriebenen Vorrichtung der Metamerieindex zu einer ausgewählten Lichtart errechnen. Um die Warenbahn nicht gesondert mit verschiedenen Lichtquellen (z. B. Neonlicht, Halogenlampe, Glühlampe, Tageslicht) beleuchten und abtasten zu müssen, wird bei Beleuchtung mit einer konstanten Lichtquelle mit vorgegebenen Farbspektrum, zum Beispiel einer Halogenlampe, die von der Warenbahn reemittierte Strahlung unter Berücksichtigung des bekannten Spektrums der Lichtquelle errechnet, d.h. die bekannte spektrale Verteilung der Lichtquelle wird herausgerechnet. Daraufhin läßt sich aus dem von der Warenbahn reemittierten Spektrum ein bei Bestrahlung mit einer anderen Lichtquelle bekannten Farbspektrums auftretendes Spektrum errechnen. Dazu müssen die bei Bestrahlung mit Halogenlampe abgetasteten Werte lediglich mit der spektralen Verteilung der anderen Lichtquelle verknüpft werden.

Im Ergebnis wird die Farbe der Warenbahn unter genormten Standardbedingungen protokolliert. Farbton, Farbsättigung und Helligkeit werden objektiv erfaßt.

### Bezugszeichenliste:

- 11: Warenbahn
- 12: Lichtquelle
- 13, 13', 13'': kreis- oder streifenförmige Bereiche
- 14, 14', 14'': kreis- oder streifenförmige Bereiche
- 15, 15', 15'': kreis- oder streifenförmige Bereiche
- 16: Führungs- oder Transporteinrichtung
- 17: Abtasteinrichtung
- 19: Protokolliereinrichtung
- 20: Traverse
- 21: Antrieb
- 22, 23: seitliche Ränder
- 24: Verblendung
- 25, 26: seitliche Rahmenteile
- 27: erste Rolle
- 28: zweite Rolle
- 29: Meßkopf
- 30: Lichtwellenleiter

## Patentansprüche

1. Verfahren zum Abtasten einer vorzugsweise textilen Warenbahn auf ihre Farbwerte mittels Warenschau,
- wobei während der Warenschau die bewegte Warenbahn (11) mit einer Lichtquelle (12) bekannten Spektrums und konstanter Intensität kontinuierlich beleuchtet wird,
- die von der Warenbahn (11) reemittierte Strahlung auf vorbestimmten kreis- oder streifenförmigen Bereichen (13, 14, 15) der Warenbahn (11) mittels einer über die Warenbahnbreite traversierenden Abtasteinrichtung (17) erfasst, über eine Zeitspanne oder Ausdehnung der Warenbahn integriert und nachfolgend spektral zerlegt wird,
- wobei die gemessene spektrale Zusammensetzung und die sich ergebenden Farbwerte oder Farbabstände zu Referenzwerten bezogen auf die jeweiligen Bereiche der Warenbahn fortlaufend protokolliert und in oder auf einem Datenträger als warenlängenbezogener Pass abgelegt werden und
- wobei mittels der Abtasteinrichtung (17) eine automatische Erfassung der Warenkanten zur Steuerung der traversierenden Bewegung erfolgt.

2. Verfahren nach Anspruch 1,
**dadurch gekennzeichnet, dass**
die reemittierte Strahlung an mehreren punkt-, strich- oder streifenförmigen Bereichen (13, 14, 15) über die Breite der Warenbahn (11) erfasst wird, wobei die Abtasteinrichtung (17) über die Breite der Warenbahn (11) traversiert und zwischen seitlichen Rändern (22, 23) der Warenbahn (11) hin- und herbewegbar ist.

3. Vorrichtung zum Durchführen des Verfahrens nach Anspruch 1 oder 2, umfassend:
- eine Führungs- oder Transporteinrichtung (16), durch welche die Warenbahn (11) im gespannten Zustand zu Zwecken der Warenschau hindurchgeführt wird,
- eine Lichtquelle (12) bekannten Spektrums und konstanter Intensität, welche die Warenbahn (11) beleuchtet,
- eine auf einer quer zur Warenbahn (11) verlaufenden Traverse (20) beweglich angeordnete Abtasteinrichtung (17) zur automatischen Erfassung der Warenkanten und Steuerung der traversierenden Bewegung, sowie zur Abtastung des von der Warenbahn (11) reemittierten Lichts über einen kreis- oder streifenförmigen Bereich (13, 14, 15),
- ein mit der Abtasteinrichtung (17) in Verbindung stehendes Spektrometer, welches das reemittierte Licht spektral zerlegt und ein für den abgetasteten Bereich (13) repräsentatives Spektrum liefert und eine Protokolliereinrichtung (19), die das jeweils abgetastete Spektrum und/oder daraus abgeleitete Farbwerte jeweils bezogen auf den abgetasteten Bereich (13, 14, 15) fortlaufend protokolliert, und
- eine Vergleichseinrichtung, um aus den abgeleiteten Farbwerten und mindestens einer Referenzmessung oder anhand einer Sollvorgabe Farbabstände zu bestimmen.

4. Vorrichtung nach Anspruch 3,
**dadurch gekennzeichnet, dass**
ein Antrieb (21) vorgesehen ist, um die Abtasteinrichtung (17) auf der Traverse (20) an vorbestimmte Meßpositionen zu bewegen.

5. Vorrichtung nach einem der Ansprüche 3 oder 4,
**dadurch gekennzeichnet, dass**
auf der Traverse (20) mit der Abtasteinrichtung (17) gegenüberliegenden Seite der Warenbahn eine Verblendung (24) angeordnet ist, welche die Warenbahn von dieser Seite her abdunkelt.

## Claims

1. A method of sampling a preferably textile material web for its colour values by means of a material inspection,
- wherein the moved material web (11) is continuously illuminated during the material inspection by means of a light source (12) of a known spectrum and constant intensity,
- wherein the radiation re-emitted by the material web (11) is detected on predefined circular or stripe-shaped zones (13, 14, 15) of the material web (11) by means of a sampling means (17) traversing the material web width, is integrated over a space of time or an extension of the material web, and is subsequently subjected to a spectrum analysis,
- wherein the measured spectral composition and the resulting colour values or colour differences to reference values relative to the respective zones of the material web are continuously recorded and are stored in or on a data carrier as a material length-specific passport, and
- wherein an automatic detection of the material edges takes place by means of the sampling means (17) for controlling the traversing movement.

2. The method according to claim 1,
**characterized in that**
the re-emitted radiation is detected on several dot-shaped, bar-shaped or stripe-shaped zones (13, 14, 15) over the width of the material web (11), with the sampling means (17) traversing over the width of the material web (11) and being reciprocatingly movable between lateral edges (22, 23) of the material web (11).

3. A device for carrying out the method according to claim 1 or 2, comprising:
- a guide or transport means (16), through which the material web (11) is passed in the stretched state for material inspection purposes,
- a light source (12) of a known spectrum and constant intensity, illuminating the material web (11),
- a sampling means (17) movably arranged on a cross-beam (20) extending transversely to the material web (11), and intended for automatically detecting the material edges and controlling the traversing movement, as well as for sampling the light re-emitted from the material web (11) over a circular or stripe-shaped zone (13, 14, 15),
- a spectrometer being in connection with the sampling means (17), which spectrometer subjects the re-emitted light to a spectral analysis and outputs a spectrum representative of the sampled zone (13), and a recording means (19), which continuously records the respective sampled spectrum and/or colour values derived therefrom, in each case relative to the sampled zone (13, 14, 15), and
- a comparator means for determining colour differences from the derived colour values and at least one reference measurement or by means of a set desired value.

4. The device according to claim 3,
**characterized in that**
a drive (21) is provided for moving the sampling means (17) to predetermined measurement positions on the cross-beam (20).

5. The device according to any one of claims 3 or 4,
**characterized in that**
on the side of the material web opposing the cross-beam (20) including the sampling means (17), a screening means (24) is arranged obscuring the material web from this side.

## Revendications

1. Procédé pour balayer une nappe de tissu de préférence textile pour déterminer ses valeurs chromatiques au moyen d'une inspection visuelle,
- dans lequel, pendant l'inspection visuelle, la nappe de tissu (11) en mouvement est éclairée en continu par une source lumineuse (12) d'un spectre connu et d'une intensité constante,
- le rayonnement réémis par la nappe de tissu (11) est détecté sur des zones (13, 14, 15) prédéterminées circulaires ou en forme de bandes, de la nappe de tissu (11), au moyen d'un dispositif de balayage (17) traversant la largeur de la nappe de tissu, intégré sur un laps de temps ou sur une certaine extension de la nappe de tissu et ensuite décomposé spectralement,
- dans lequel la composition spectrale mesurée et les valeurs chromatiques ou les différences chromatiques par rapport à des valeurs de référence, qui en résultent, sont consignées de manière continue vis-à-vis des zones respectives de la nappe de tissu, et mémorisées à titre de passeport se référant à la longueur du tissu, dans ou sur un support de données, et
- dans lequel une détection automatique des lisières de tissu au moyen du dispositif de balayage (17) a lieu pour commander le mouvement de traversée.

2. Procédé selon la revendication 1, **caractérisé en ce que** le rayonnement réémis est détecté sur la largeur de la nappe de tissu (11) à plusieurs zones en forme de points, de traits ou de bandes (13, 14, 15), le dispositif de balayage (17) traversant la largeur de la nappe de tissu (11) et pouvant être déplacé en va-et-vient entre les bords latéraux (22, 23) de la nappe de tissu (11).

3. Dispositif pour la mise en oeuvre du procédé selon l'une ou l'autre des revendications 1 et 2, comprenant :
- un dispositif de guidage ou de transport (16) à travers lequel la nappe de tissu (11) à l'état tendu passe dans le but de l'inspection visuelle,
- une source lumineuse (12) de spectre connu et d'intensité constante qui éclaire la nappe de tissu (11),
- un dispositif de balayage (17) agencé mobile sur une traverse (20) s'étendant perpendiculairement à la nappe de tissu (11) pour détecter automatiquement les lisières de tissu et pour commander le mouvement de traversée ainsi que pour balayer la lumière réémise par la nappe de tissu (11) sur une zone circulaire ou en forme de bande (13, 14, 15),
- un spectromètre relié au dispositif de balayage (17), lequel décompose spectralement la lumière réémise et fournit un spectre représentatif pour la zone (13) balayée, et un dispositif de consigne (19) qui consigne de manière continue le spectre respectivement balayé et/ou les valeurs chromatiques qui en dérivent, par rapport à la zone respective balayée, et
- un dispositif de comparaison pour déterminer des différences chromatiques à partir des valeurs chromatiques résultantes et au moins à partir d'une mesure de référence ou à l'aide d'une valeur de consigne déterminée.

4. Dispositif selon la revendication 3, **caractérisé en ce qu'**il est prévu un entraînement (21) pour déplacer le dispositif de balayage (17) sur la traverse (20) à des positions de mesure prédéterminées.

5. Dispositif selon l'une ou l'autre des revendications 3 et 4, **caractérisé en ce que** sur le côté de la nappe de tissu opposé à la traverse (20) avec le dispositif de balayage (17) est agencé un écran (24) qui assombrit la nappe de tissu depuis ce côté.
